Europäisches Patentamt

European Patent Office

Office européen des brevets

(19)

(11) EP 0 428 751 B1

(12)

# EUROPEAN PATENT SPECIFICATION

(45) Date of publication and mention
of the grant of the patent:
**18.12.1996 Bulletin 1996/51**

(21) Application number: **90908625.8**

(22) Date of filing: **30.05.1990**

(51) Int Cl.6: **G01N 21/89**, D21F 7/06

(86) International application number:
**PCT/JP90/00705**

(87) International publication number:
**WO 90/15322 (13.12.1990 Gazette 1990/28)**

(54) **TEXTURE MEASURING METHOD AND TEXTURE CONTROL METHOD**

VERFAHREN ZUR MESSUNG UND KONTROLLE VON TEXTUREN.

PROCEDE DE MESURE DE TEXTURES ET PROCEDE DE COMMANDE DE TEXTURES

(84) Designated Contracting States:
**DE FR GB**

(30) Priority: **31.05.1989 JP 138439/89**
**07.07.1989 JP 176576/89**
**17.10.1989 JP 269906/89**
**17.10.1989 JP 269907/89**

(43) Date of publication of application:
**29.05.1991 Bulletin 1991/22**

(73) Proprietor: **ISHIKAWAJIMA-HARIMA**
**JUKOGYO KABUSHIKI KAISHA**
**Chiyoda-ku Tokyo 100 (JP)**

(72) Inventors:
• **YAKABE, Masahiro**
**Chiba 286 (JP)**
• **SUZUKI, Satoshi Shintoyosu-ryo 3-3-23, Toyosu**
**Tokyo 135 (JP)**
• **DEGAWA, Sadao**
**Tokyo 201 (JP)**
• **MURAYAMA, Shigeki 3-11-8-402, Namiki**
**Kanazawa-ku**
**Kanagawa 236 (JP)**
• **ISHIBASHI, Koichi 3-24-6, Higashihorikiri**
**Tokyo 124 (JP)**
• **NAKAJIMA, Ikuo 149714, Sasai**
**Saitama 350-13 (JP)**
• **SAKAI, Koji 322, Tenzincho Kamimaruko**
**Nakahara-ku**
**Kanagawa 211 (JP)**

(74) Representative: **Jennings, Nigel Robin et al**
**KILBURN & STRODE**
**30 John Street**
**London WC1N 2DD (GB)**

(56) References cited:
**EP-A- 0 076 209          EP-A- 0 329 889**
**JP-A- 0 290 047          JP-A- 5 548 644**
**JP-A-53 134 906          JP-A-58 173 456**
**US-A- 4 760 271**

**Description**

TECHNICAL FIELD

The present invention relates to a formation measuring method to identify unevenness of transmitted light on paper as a plane image and to evaluate the property and the quality of the paper so as to control quality improvement and also relates to a formation control method using said formation measuring method.

BACKGROUND ART

Quality of paper formation (minute uneven thickness) indicates the degree of fiber variations in paper sheet. Generally, this has been checked by placing a sample sheet on an inspection box accommodating a light source to visually examine transparency distribution of the sheet.

This method, which is widely used in factories, is rather of subjective nature and results of the inspection varies according to each inspector since sufficient knowledge and long experience are required for such inspection.

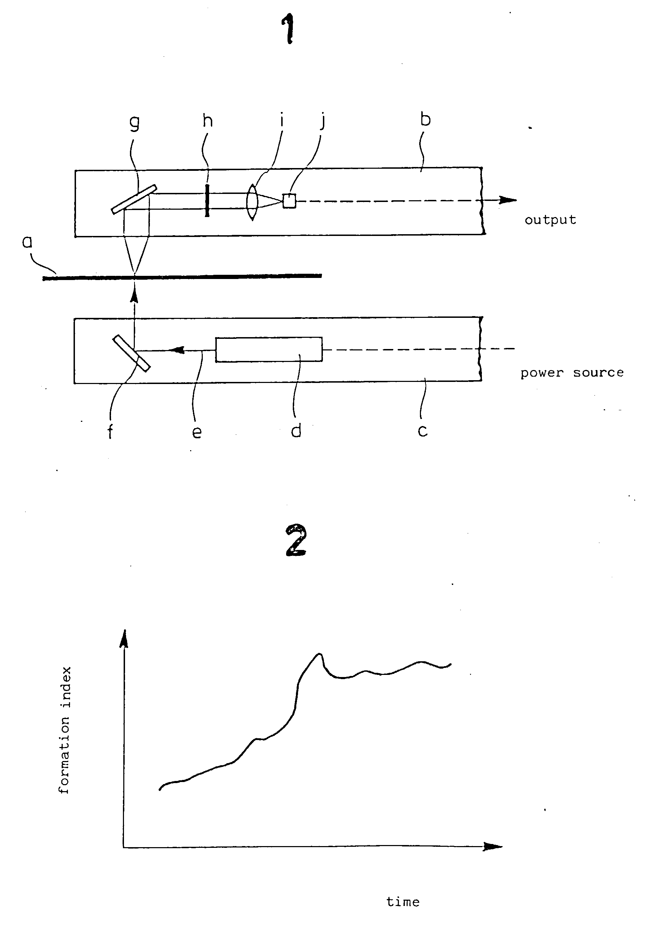

For this reason, a formation meter as shown in Fig. 1 has been developed and is practically used. This formation meter comprises upper and lower heads b and c above and below the running paper a to be measured, the lower head c accommodating a light source d such as laser connected to an electric power source and a mirror f for irradiating the light from said light source d onto the paper a. The upper head b accommodates a photocell j for receiving the light e, which has passed through said paper a via a mirror g, a filter h and a lens i.

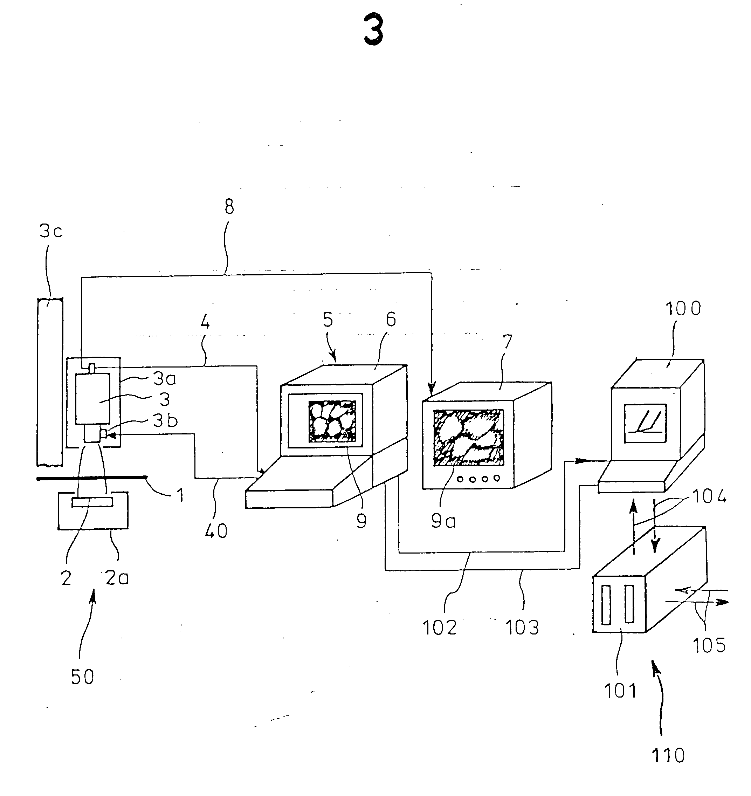

The light e from the light source d is irradiated on the paper a through the mirror f; the light e passing through the paper a enters the photocell j through a mirror g, a filter h and a lens i and is converted to voltage and is outputted. As shown in Fig. 2, the voltage value is indicated as formation index relative to the time.

When the formation index is measured, jet/wire ratio (J/W ratio) and the like are changed according to said formation index by judgment of an inspector to obtain better formation.

DISCLOSURE OF INVENTION

In the above-mentioned formation meter, however, the diameter of the light e irradiated from the light source d to the paper a is about 1 mm and any fluctuation of transmitted light level is detected as flock size through one-dimensional processing of the transmitted light signal. Although the formation of the paper a is converted to numerical value, the sample for judgment is too small to make total judgment for accurate identification of the formation as judgment through human vision.

In the control of the formation, J/W ratio is adjusted only by trial and error. Because of the control being based on measurement results by the above-mentioned formation meter, which does not necessarily reflect the total conditions, improvement of the paper quality is rather difficult.

The present invention was made to overcome such disadvantages of the prior art and will provided a formation measuring method for more accurate evaluation of the formation objectively not as point but as plane. The present invention will further provide a formation controlling method for efficient improvement of paper quality according to results of measurement by the formation measuring method.

Document JP-A-53-134906 represents further prior art. This document discloses a method of controlling the basis weight of the paper web in its widthwise direction. Also prior art is document US-A-4760271; this discloses the features set out in the preamble to the independent claims.

According to a first aspect of the present invention a formation measuring method is characterised by those features set out in the characterising portion of Claim 1.

According to a second aspect, a formation measuring method is characterised by those features set out in the characterising portion of Claim 2.

The invention also extends to a formation control method.

Fig. 1 is a view showing an example of conventional formation meters;
Fig. 2 is a diagram showing the relationship between time and formation index as obtained by the formation meter in Fig. 1;
Fig. 3 shows an embodiment of the formation measuring method of the present invention as well as the formation controlling method using said formation measuring method;
Figs. 4(a), 4(b), 4(c), 4(d) and 4(d') are views to explain the image processing on a display unit;
Fig. 5 is a schematic illustration of the relationship between windows and pixels on the display unit;
Fig. 6 is a view to explain the image in the case where frequency analysis is performed on the pixels which constitute the image;

Fig. 7 is a diagram showing results of frequency analysis;

Figs. 8(a), 8(b), 8(c), 8(d) and 8(e) are to explain a variation of image processing on image display in the formation measuring method of the present invention;

Fig. 9 is a general side view showing sites of installation of formation meters each comprising stroboscope and camera;

Fig. 10 is a variation curve diagram showing the relationship between camera aperture and formation factor;

Fig. 11 is a diagram showing a membership function obtained on one of the formation factors;

Fig. 12 is a diagram showing how to obtain the center of gravity by synthesizing the membership functions to the variation curves of a plurality of formation factors;

Fig. 13 is a side view of wire part of a paper machine;

Figs. 14(i), 14(ii), 14(iii), 14(iv), 14(v) and 14(vi) are to explain the procedure to determine the change of J/W ratio according to the formation factors;

Fig. 15 is a flow chart of an example of the formation controlling method using the formation measuring method of the present invention;

Fig. 16 shows an arrangement of another embodiment comprising a plurality of cameras with different visual fields;

Fig. 17 is a lateral sectional view of a formation meter which grasps or catches images in wide and narrow visual fields;

Figs. 18(a) and 18(b) are variation curve diagrams showing the relationship between J/W ratio and formation factor A;

Figs. 19(a) and 19(b) are membership function diagrams showing the relationship between J/W ratio and evaluation values for formation factor A;

Fig. 20 is a wide-narrow visual field membership function diagram obtained by overlapping Figs. 19(a) and 19(b);

Figs. 21(a) and 21(b) are variation curve diagrams showing the relationship between J/W ratio and formation factor B;

Figs. 22(a) and 22(b) are membership function diagrams showing the relationship between J/W ratio and evaluation values for formation factor B;

Fig. 23 is a wide-narrow visual field membership function diagram obtained by overlapping Figs. 22(a) and 22(b);

Fig. 24 is a general membership function diagram obtained by overlapping Figs. 20 and 23; and

Fig. 25 is a flow chart showing the flow of coarse and fine controls.

## BEST MODE FOR CARRYING OUT THE INVENTION

In the following, embodiments of the present invention will be described in connection with the drawings.

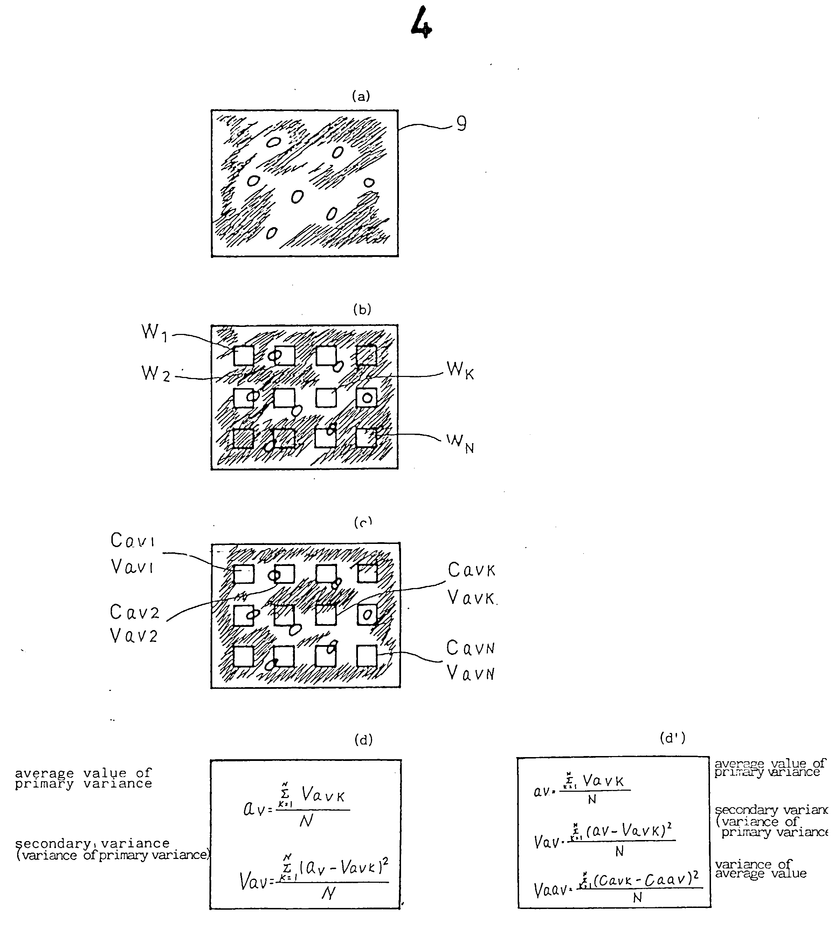

Figs. 3, 4 and 5 show an embodiment of the present invention in which disposed on one side of the paper 1 to be measured is a light source box 2a accommodating a light source 2 such as source of parallel beams having variable light quantity. Arranged on its opposite side is a camera box 3a which is movable in widthwise and vertical directions of the paper 1 relative to the rail 3c. The camera box 3a accommodates a camera 3 having zooming function and with an automatic aperture control device 3b to make up a formation meter 50. A CCD (charge coupled device) frame accumulation mode camera or its equivalent is used as camera 3 of this embodiment in combination with a stroboscope 2,. The camera 3 is connected through a cable 4 with a computing element 5 for image processing having a display unit 6. The camera 3 is further connected with another display unit 7 through a cable 8 so as to permanently display transmitted light image of the paper 1. The computing element 5 for image processing is connected with the automatic aperture control device 3b through a cable 40 so that a control signal from the image processing computing element 5 is inputted to the automatic aperture control device 3b to perform automatic control of the aperture.

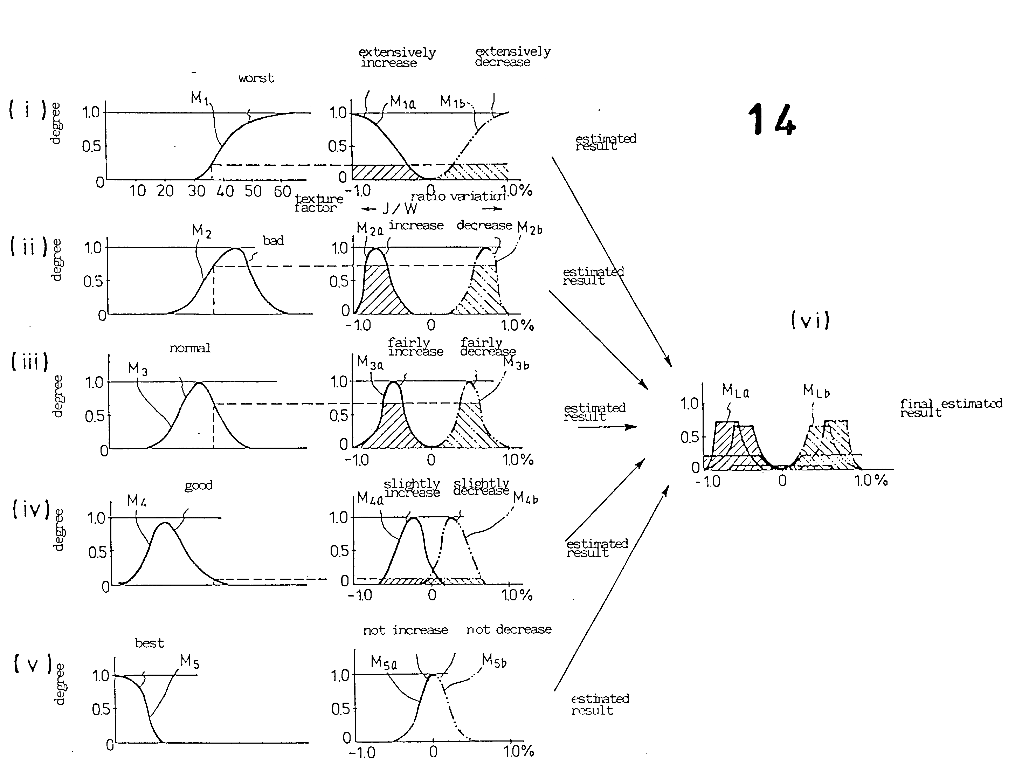

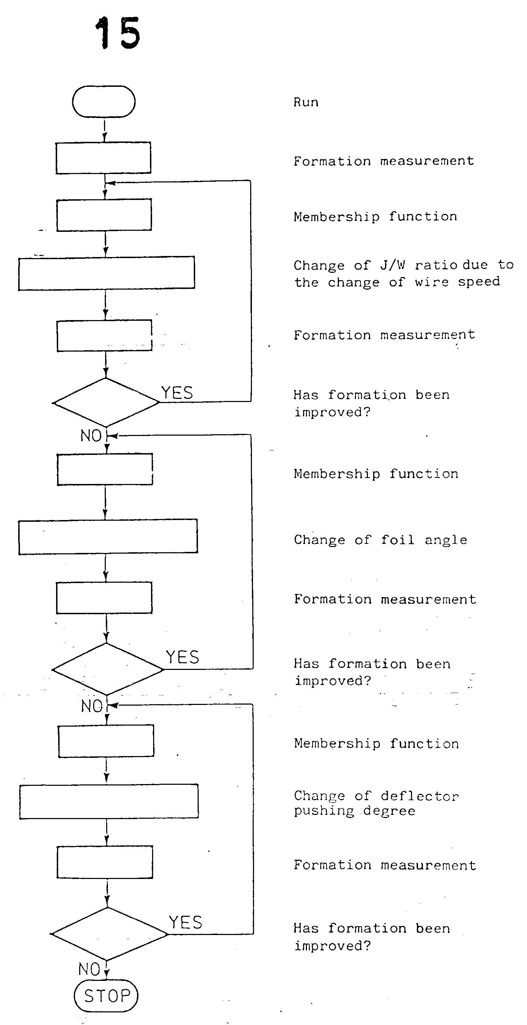

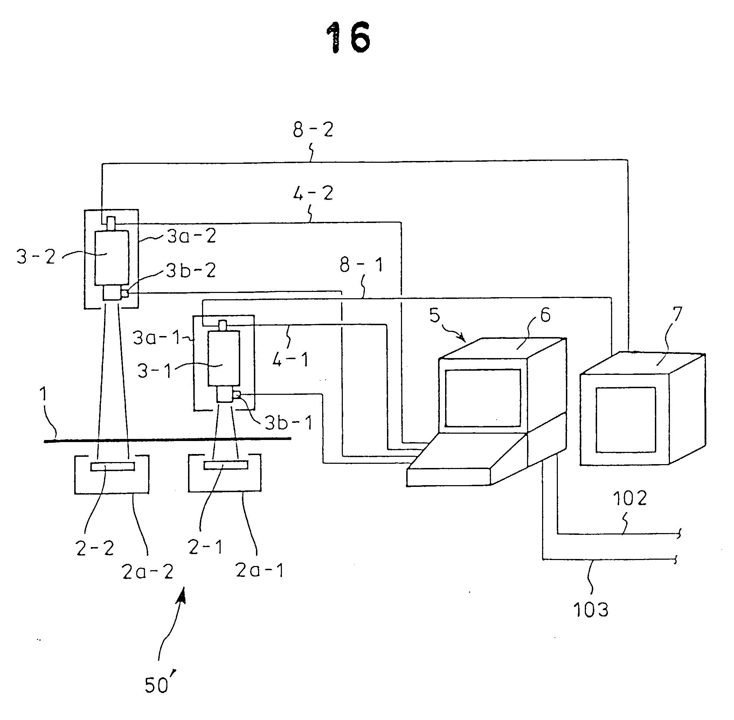

To the image processing computing element 5, a fuzzy control device 110 comprising a control computer 100 and a controller 101 for control is arranged for the controlling purpose. The image processing computer element 5 is connected with the control computer 100 through a formation signal line 102 and a control signal line 103. The computer 100 is connected with the controller 101 through communication lines 104. Further, connected with the controller 101 through the control signal lines 105 are an actuator for changing a ratio of the speed of jet injected from a below-mentioned head box 10 in Fig. 13 to the wire speeds of bottom and top wires 12 and 16, an actuator for changing the angle of foils 14 and the like.

Since the paper 1 to be inspected is of considerable size, a portion of the paper to be picked up by the camera 3 as sample (10 mm x 10 mm or more) is to represent all features of the paper 1 and include an apparent steady area or area where quality of the entire paper 1 can be judged by inspecting this area.

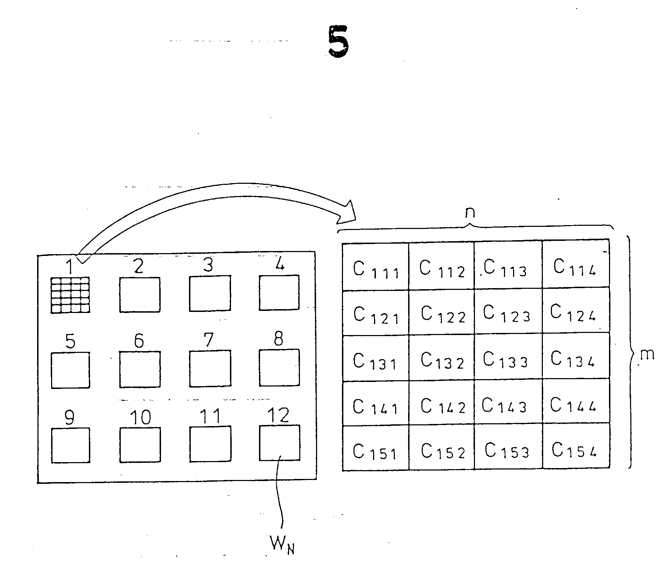

During measurement, adjustment is made such that an adequate quantity of transmitted light is obtained from the light source 2 according to the thickness of the paper 1. As to adjustment of aperture of the camera 3, description will be given later. A signal representative an image entering the camera 3 enters the display unit 7 and forms an image 9a of transmitted light on the paper 1. On the other hand, the image signal entering the image processing computing

EP 0 428 751 B1

element 5 is displayed on the display unit 6 as an image 9 in Fig. 4(a) showing an area by which the quality of the entire paper 1 is determinable. On the screen, the concentration of holes and the like is displayed thinner (lighter) than average and overweighted portions with dust and the like attached thereto are displayed denser (darker) than the average.

On the image 9, a predetermined number of windows $W_1$, $W_2$, ..., $W_k$, ..., $W_N$ are set which have an area by about two times as large as the average size of hole or the minimum size of flock peculiar to paper as a variance calculation unit (Fig. 4(b)). Tile size and number of the windows can be selected according to the grade, finish or the like of paper.

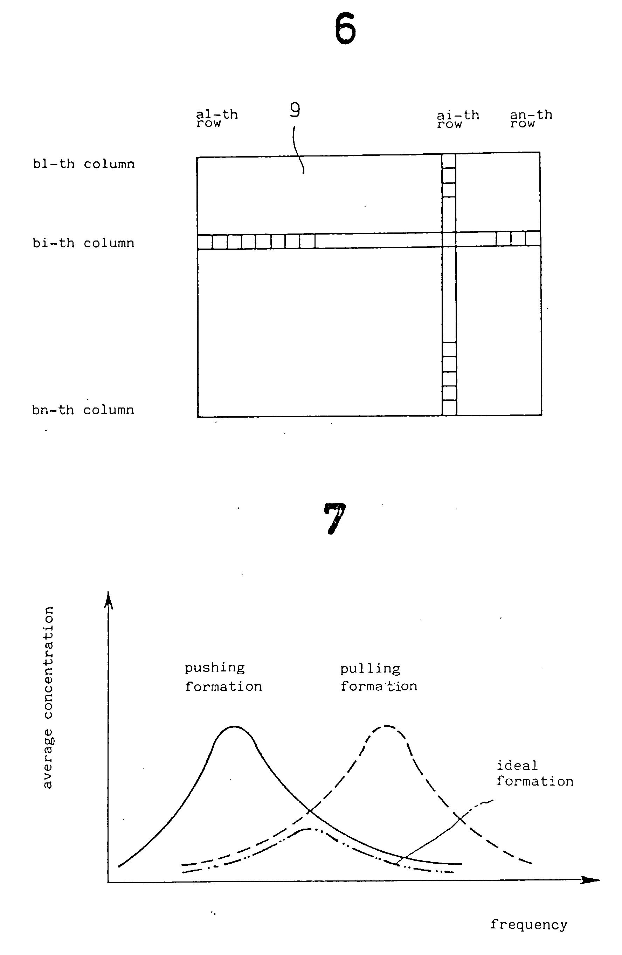

In the case where pixels of the display unit 6 is contained by the quantity of $M = n \times m$ ($n = 4$ and $m = 5$ in the example shown) in a window in Fig. 5, the density (intensity) of the pixels in line i and row j in the k-th window $W_k$ is expressed by $C_{kij}$. Thus, the average value of density $C_{aVk}$ in k-th window $W_k$ can be calculated as:

$$C_{aVk} = \frac{\displaystyle\sum_{j=1}^{n}\sum_{i=1}^{m} C_{kij}}{M}$$

The variance $V_{aVk}$ of the density in k-th window $W_k$ (hereinafter referred as primary variance), i.e. the variation of density in a window $W_k$ is calculated as (See Fig. 4(c)):

$$V_{aVk} = \frac{\displaystyle\sum_{j=1}^{n}\sum_{i=1}^{m} (C_{aVk} - C_{kij})^2}{M}$$

Further, the average value $a_V$ of primary variance for all windows $W_1$, $W_2$, ..., $W_k$, ..., $W_N$ is calculated:

$$a_V = \frac{\displaystyle\sum_{k=1}^{N} V_{aVk}}{N}$$

Based on the average value $a_V$ of primary variance of all windows, the variance $V_{av}$ of primary variance for all windows $W_1$, $W_2$, ..., $W_k$, ..., $W_N$ (hereinafter referred as secondary variance) is calculated:

$$V_{av} = \frac{\displaystyle\sum_{k=1}^{N} (a_V - V_{aVk})^2}{N}$$

4

And the results of the calculation are displayed (See Fig. 4 (d)).

The average value $a_V$ of primary variance for all windows expresses the macro variance on the screen. The formation can be quantitatively determined as the formation factor in relatively wide visual field (formation factor in the case where paper is not even, e.g. the paper having serious defect). In the evaluation in the final stage of control where the entire paper is uniform and formation is evaluated by micro-judgment, the formation can be quantitatively determined using the variance $V_{aV}$ (secondary variance) of primary variance of density for all windows as the formation factor.

Further, in addition to the average value $a_V$ of primary variance for all windows and to the secondary variance $V_{aV}$ for all windows as a whole, the variance of average value $C_{aVk}$ in the windows $W_1$, $W_2$, ..., $W_k$,..., $W_N$ is calculated:

$$C_{aaV} = \frac{\displaystyle\sum_{k=1}^{N} C_{aVk}}{N}$$

$$V_{aaV} = \frac{\displaystyle\sum_{k=1}^{N} (C_{aVk} - C_{aaV})^2}{N}$$

and the results of calculation may be displayed (See Fig. 4 (d')). The variance $V_{aaV}$ of average value of the density for each window expresses variance $V_{aaV}$ of average value of the density for each window expresses macro-variance of light and dark to average density on the screen and can be used as formation factor for quantitative determination of the formation when it is uniform as a whole and density is very uneven.

It is needless to say that in this case formation may be quantitatively determined using a formation factor through combination of $a_V$, $V_{aaV}$ and $V_{aV}$ according to object.

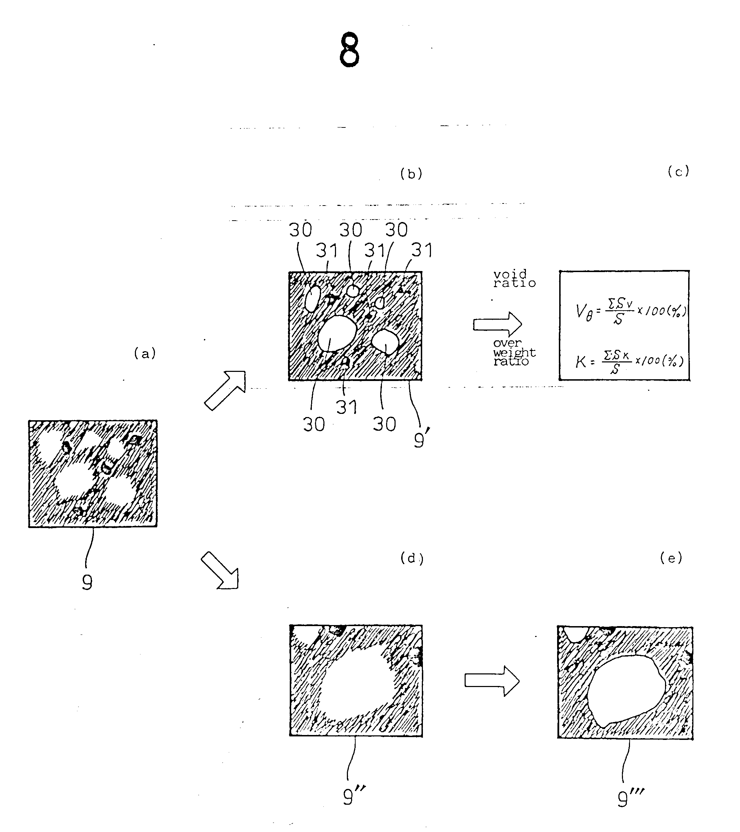

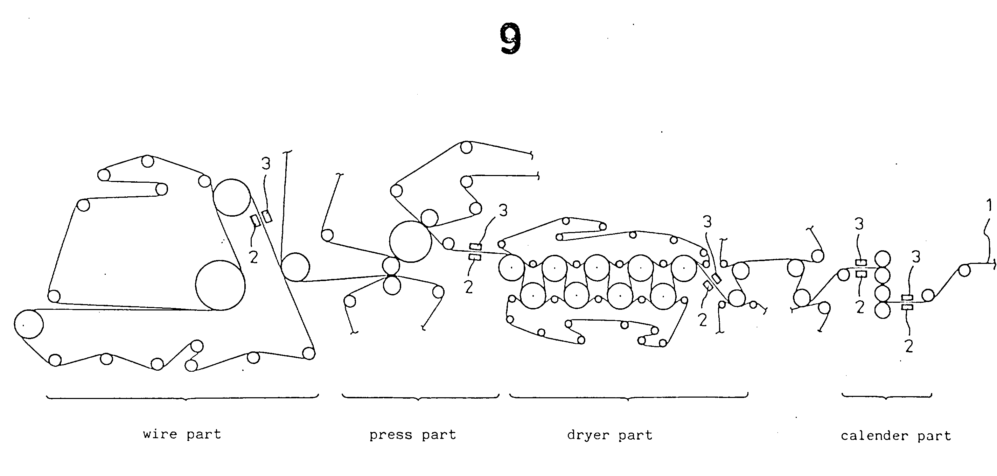

Connected to the image processing computing element 5 are a data logger (not shown) for accumulating density datum for pixels of columns $a_1$ - $a_n$ in $b_i$-th row or rows $b_1$ - $b_n$ in $a_i$-th column composing the image 9 displayed on the display unit 6 as shown in Fig. 6 as well as an analyzer (not shown) for pulling out data from the data logger to grasp them as changes over time for frequency analysis. Alternatively, the data accumulated in the data logger is processed by analysis software. Thus, judgment may be made whether the pulsating component is present or not in the paper 1 according to results of frequency analysis in longitudinal direction (along length of the paper 1). Frequency analysis in lateral direction (along width of the paper 1) may be made using stroboscope as the light source 2 unlike conventional way of transmitted light being caught by spot, so that features corresponding to the flock can be expressed, reproducing the density of formation with high fidelity. Accordingly, whether the formation is pulling formation or pushing formation can be easily judged. Pulling formation is the status where flock is extended in form of lines while pushing formation is the status where flock is in form of scales. In Fig. 7 with average density taken on ordinate and frequency on abscissa, the ideal formation is shown by two-dot chain line while pulling formation is given by solid line and pushing formation by broken line respectively.

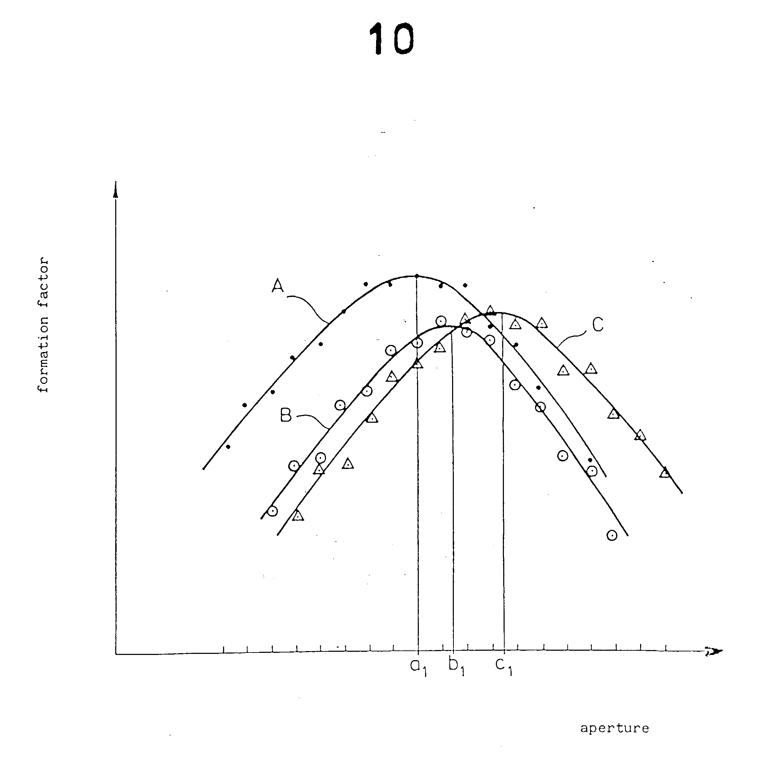

Figs. 8(a) - 8(e) show the variations in display of the image in the formation measuring method of the present invention. For more clarification of the image 9 displayed on the display unit 6, three-value image processing is performed, expressing the density by three steps of 'dense', 'moderate' and 'light' to display the image 9' as shown in Fig. 8(b). The ratio of the sum $\Sigma S_V$ of areas 30 with maximum transmitted light on said image 9' to the total area S, i.e. void ratio $V_\theta$ is calculated as:

$$V_\theta = \frac{\Sigma S_V}{S} \times 100 \ (\%)$$

The ratio of the sum $\Sigma S_K$ of areas 31 with minimum transmitted light on said image 9' to the total area S, i.e. overweight ratio K is calculated as:

$$K = \frac{\Sigma S_K}{S} \times 100 \ (\%)$$

and displayed (Fig. 8 (c)). Thus, the formation of the paper 1 is quantitatively determined. If necessary, apparent defects in said image 9 or apparently satisfactory portions of the image 9 are displayed as enlarged image 9" as shown in Fig. 8(d) which is image-processed with expression of the density in three steps so that enlarged image 9''' of Fig. 8(e) is displayed, which in turns is used as material for identification of the cause of the formation.

In the example shown in Figs. 8(a) - 8(e), plane information can be obtained by image processing with features of the paper 1 emphasized. Above all, holes, dust and the like which are not assessable in the past can be detected in earlier stage, thus contributing to improvement of quality and enhancement of productivity. Also, most satisfactory part or most unsatisfactory part of the image can be picked up and easily analyzed.

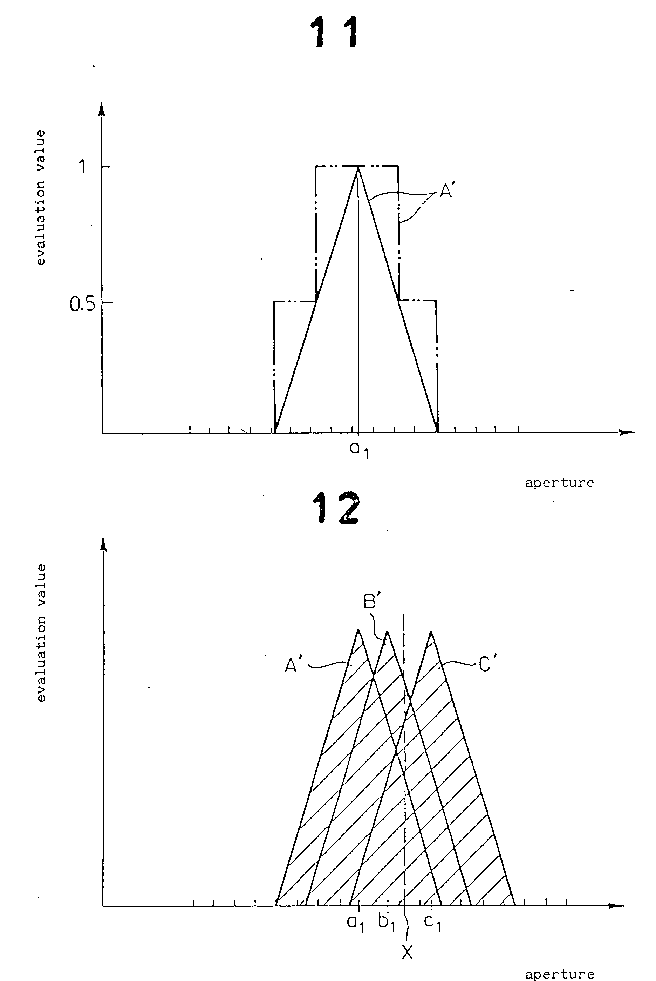

The formation meter comprising the light source 2 and the camera 3 used in the formation measuring method as described above may be installed in any cite such as wire part, press part, dryer part, calender part and like in Fig. 9.

Now, to determine the aperture of the camera 3 will be described.

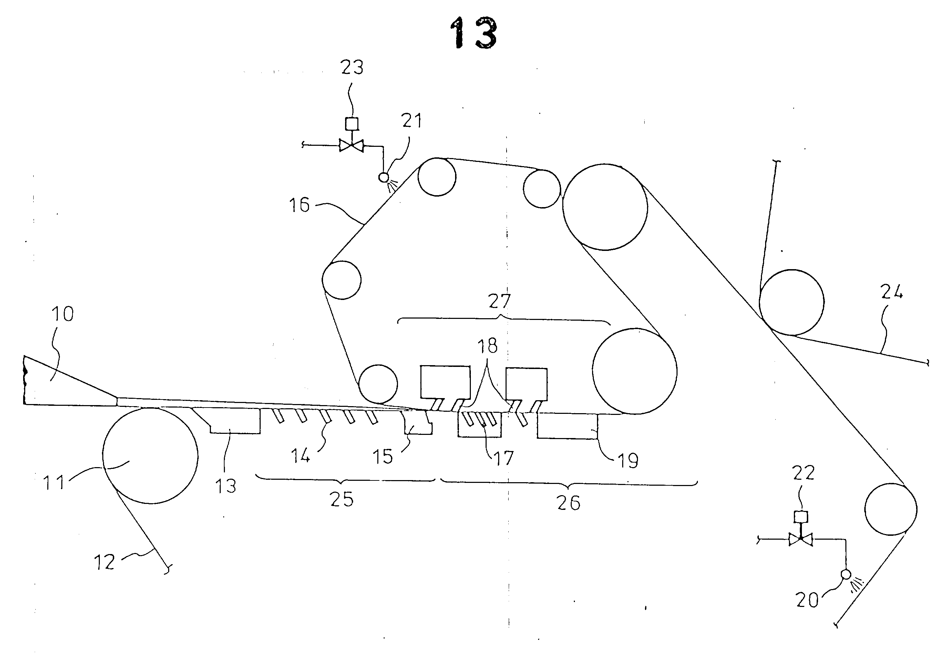

One of the formation factors obtained above such as the average value $a_V$ of primary variance of density, secondary variance $V_{aV}$ of density, variance $V_{aaV}$ of average value of density, analytical specification of frequency in lateral direction and hole specification is named A, other as B, and still other as C, ... Values of formation factors A, B, C ,... are obtained with the aperture of the camera 3 being changed at constant interval as shown in Fig. 10. Results are variation curves having maximum or minimum values (maximum shown in the figure). Each maximum point $a_1$, $b_1$, $c_1$, ... of the curves most typically represents the features of the formation factors A, B, C, ..., respectively.

Through the data processing of each of the variation curves of the formation factors A, B, C ..., membership functions in triangular or rod-like form as shown in Fig. 11 (only the membership function A' related to formation factor A is given in the figure) is obtained with evaluation value of maximum being 1. By synthesizing each of the membership functions A', B', C', ... thus obtained, a center of gravity X (center of gravity of the area) is obtained as given in Fig. 12.

This point X is the aperture of the camera 3.

The aperture of the camera 3 is automatically adjusted by the control signal from the image processing computing element 5 to the automatic aperture device 3b so that the aperture will be equal to the value thus obtained.

By the above procedure, the aperture of the camera 3 can be automatically selected so that the most characteristic information of the sample can be obtained. Accordingly, formation can be measured more accurately, causing no individual difference in measurement results.

Thus, it is possible to quantitatively determine the formation as plane, not as points like the prior art, and to evaluate formation more accurately and objectively, and further to utilize the formation factors for the control of J/W ratio, drainage and the like.

Use of stroboscope as the light source 2 will make it possible to apply the formation measuring method as described above not only to off-line operation but also to on-line operation with high speed (1500 m/min. or so) and high basis weight (basis weight: about 300 g/m$^2$).

Advantages in the use of stroboscope as light source 2 are as follows:

(1) There is less deviation of screen during high-speed on-line measurement and no trouble occurs on the analysis of pixels on the screen due to the deviation on screen.
(2) When shuttering the camera, density can be expressed in three steps of 'dense', 'moderate' and 'light' to clearly define the image up to the analysis of three-value imaging; but it is not suitable for detecting slight density such as formation meter. Combination of stroboscope with non-shuttering camera is more suitable for high-speed photographing to detect the density.
(3) Because high light quantity can be easily obtained by stroboscope (pulse light source), (a) the aperture of camera can be reduced during photographing, which minimizes the influence of disturbance, and (b) even thicker paper can easily transmit light.
(4) There is speed limit in using mechanical shuttering whereas, needless to say, combination of stroboscope with electrical shuttering enables photographing of image at higher speed.

Advantages of CCD frame accumulated mode camera are that still image can be photographed by stroboscope and the image signal can be equally incorporated.

Next, description is given on the method for controlling formation through application of the concept of membership function based on the formation factors obtained by the above formation measuring method (See R. Yamakawa: 'Concept of Fuzzy Computer'; November 10, 1988, 3rd print; Kodansha).

The control is performed through fuzzy control unit 110 comprising the control computer 100 and the controller 101 in Fig. 3 based on the formation factors obtained by the image processing computing element 5.

Fig. 13 is a side view showing the wire part of a paper machine, where 10 represents a head box; 11, a breast roll; 12, bottom wire; 13, a forming board; 14, foils; 15, a wet suction box; 16, top wire; 17 and 18, deflectors; 19, a suction box; 20 and 21, showers to wash off dust attached on bottom wire 12 and top wire 16; 22 and 23, automatic valves for adjusting quantity of water from the showers 20 and 21; and 24, felt. J/W ratio (the ratio of jet speed injected from the head box 10 to the speed of bottom and top wires 12 and 16), angles of the foils 14 at an initial drainage area 25, pushing degrees of the deflectors 17 and 18 at a bottom secondary drainage area 26 and at a top secondary drainage area 27 are changed respectively according to the formation factors obtained by the above formation measuring method. Suction quantity of the suction box 19 and openings of the automatic valves 22 and 23 of the showers 20 and 21 are changed if necessary.

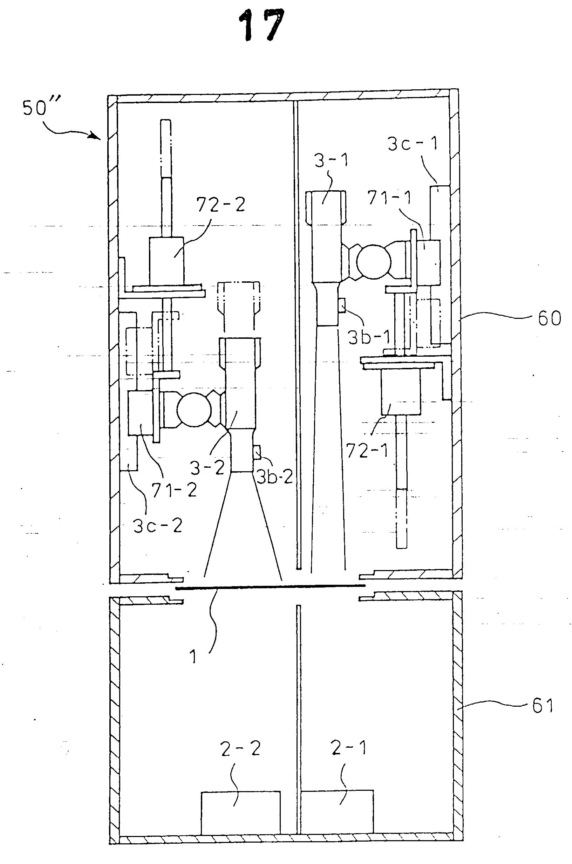

Based on experimental data performed in advance, membership function curves are obtained in advance as shown in Figs. 14(i) - 14(v): five membership functions curves for formation $M_1$ - $M_5$ to specify the quality of the paper 1 in five steps of 'worst', 'bad', 'normal', 'good' and 'best' from the degree (ordinate) corresponding to formation factor (abscissa) of the paper 1 and five membership function curves for control $M_{1a}$ - $M_{5a}$ and $M_{1b}$ - $M_{5b}$ to the corresponding degree (ordinate) to the changes (abscissa) of J/W ratio (only increase or decrease of wire speed in this case) in response to each of the membership function curves $M_1$ - $M_5$ to specify the quality of the paper 1.

Degree of matching at intersections of the formation factors of the paper 1 obtained by the formation measuring method with each of the membership function curves $M_1$ - $M_5$ to specify the quality of the paper 1 is obtained. In correspondence to each of the matching degrees, results of J/W ratio changes are obtained from the respective membership function curves $M_{1a}$ - $M_{5a}$ and $M_{1b}$ - $M_{5b}$ showing changes of the J/W ratio. Further, results of the estimated change of J/W ratio are overlapped and synthesized and final membership functions $M_{La}$ and $M_{Lb}$ showing final estimated results of the J/W ratio change are found as shown in Fig. 14(vi). Abscissa component of either of the gravity centers of the final membership functions $M_{La}$ and $M_{Lb}$ where the area surrounded by final membership function $M_{La}$ ordinate or $M_{Lb}$ ordinate and abscissa is halved is used as increment or decrement of the actual wire speed, determining actual change of J/W ratio for control of J/W ratio.

Fig. 14 shows a case where the formation factor is 35. Since ordinate component (matching degree) of the intersection with the membership function curve $M_1$ showing 'worst' of Fig. 14 (i) is about 0.25, the head of the control membership function curve $M_{1a}$ or $M_{1b}$ to 'extensively increase' or 'extensively decrease' wire speed by extending the line horizontally from the intersection is scraped off at about 0.25 of the matching degree and only hatched portion is adopted as estimated result of increment or decrement of the wire speed. Also, since ordinate component (matching degree) of the intersection with the membership function curve $M_2$ showing 'bad' of Fig. 14 (ii) is about 0.75, the line from the intersection is extended, the head of the control membership function curve $M_{2a}$ or $M_{2b}$ to 'increase' or 'decrease' wire speed is scraped off at about 0.75 of matching degree and only hatched portion is adopted as estimated result of increment or decrement of the wire speed. Further, since ordinate component (matching degree) of the intersection with the membership function $M_3$ showing 'normal' of Fig. 14 (iii) is about 0.7, the line from the intersection is extended horizontally, the head of control membership function curve $M_{3a}$ or $M_{3b}$ to 'fairly increase' or 'fairly decrease' the wire speed is scraped off at about 0.7 of the matching degree and only hatched portion is adopted as estimated results of increment or the decrement of wire speed. Also, since ordinate component (matching degree) of the intersection with the membership function curve $M_4$ showing 'good' of Fig. 14 (iv) is about 0.1, the line from the intersection is extended horizontally, the head of the control membership function curve $M_{4a}$ or $M_{4b}$ to 'slightly increase' or 'slightly decrease' the wire speed is scraped off at about 0.1 of the matching degree and only hatched portion is adopted as estimated result of increment or decrement of the wire speed. Further, with the formation factor being 35 in relation to the membership function curve $M_5$ showing 'best' of Fig. 14(v), there is no intersection. Therefore, the matching degree to the control membership function curve $M_{5a}$ or $M_{5b}$ to 'not increase' or 'not decrease' the wire speed is 0, i.e. it is necessary to increase or decrease the wire speed. Accordingly, with the formation factor being 35 or so, overlap and synthesis of the estimated results lead to the center of gravity being located between 'fairly increase' and 'increase' or between 'fairly decrease' and 'decrease' where matching degree is relatively high as shown in Fig. 14 (vi) and increment or decrement of wire speed is determined. For the judgment on whether to increase or to decrease the wire speed, one of the centers of gravity (e.g. the center of gravity to decrease) is adopted from the final estimated result. In the case where improvement of formation is noted (i.e. the difference between the formation factor before the control and the formation factor during the control is positive), control is performed to decrease the wire speed. In the case where improvement of formation is not noted (i.e. the difference between formation factor before the control and the formation factor during control is negative), control is performed thereafter in the direction to increase the wire speed. Thus, more efficient control can be achieved.

In this way, by adopting the fuzzy theory using membership functions, it is possible to perform not on-off control but mild control without giving radical change on the paper 1.

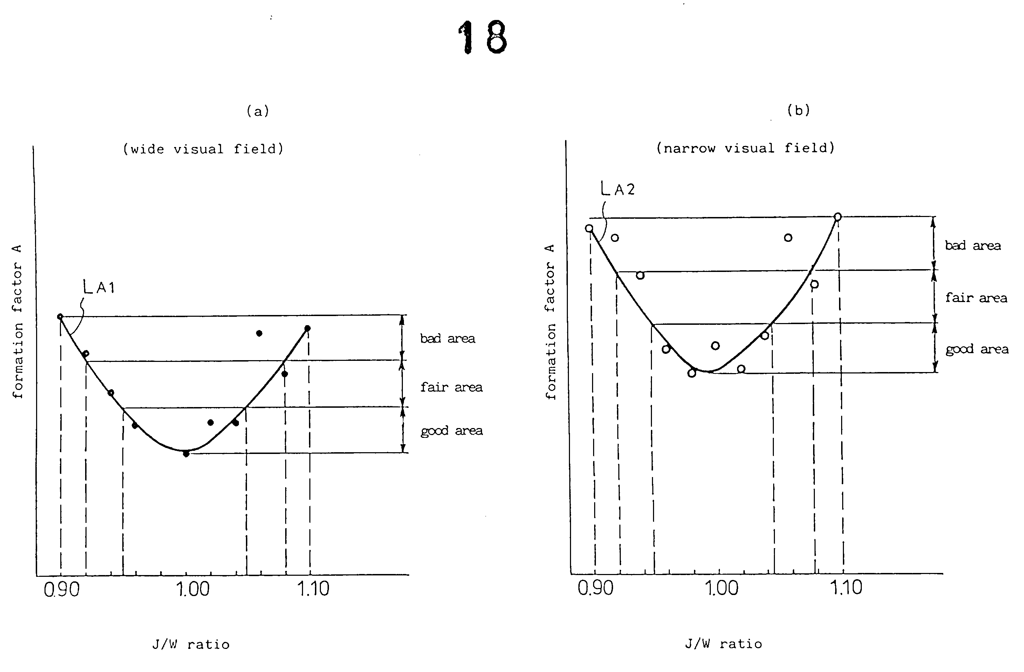

When J/W ratio is changed in this way and no further improvement of formation is found by the repeated change of J/W ratio as shown in Fig. 15, the formation is improved by sequential control such as change of foil angle or change of deflector pushing degree using the membership functions as in the case of the J/W ratio changes in Figs. 14(i) - 14(vi).

In controlling the J/W ratio, it is possible to increase J/W ratio in the case of pulling formation and to decrease J/W ratio in the case of pushing formation, using the results of frequency analysis (i.e. whether the formation is pulling or pushing) of the density of the image in lateral direction. In so doing, formation control can be achieved reliably and efficiently.

Further, it is possible to observe the entire formation by lifting the camera 3 along the rail 3c in Fig. 3 to widen visual field of the camera 3 at the starting of measurement. The visual field of the camera 2 is gradually narrowed down by moving down the camera 3 along the rail 3c as the formation is improved by the formation control method after starting the control. When the formation is substantially stabilized and the control is almost completed, the camera 3 may be lifted up again along the rail 3c to return to the initial large visual field for monitoring.

This contributes to the fine control of the formation and is useful to cope with changes of external conditions such as change of raw material condition after the formation is stabilized.

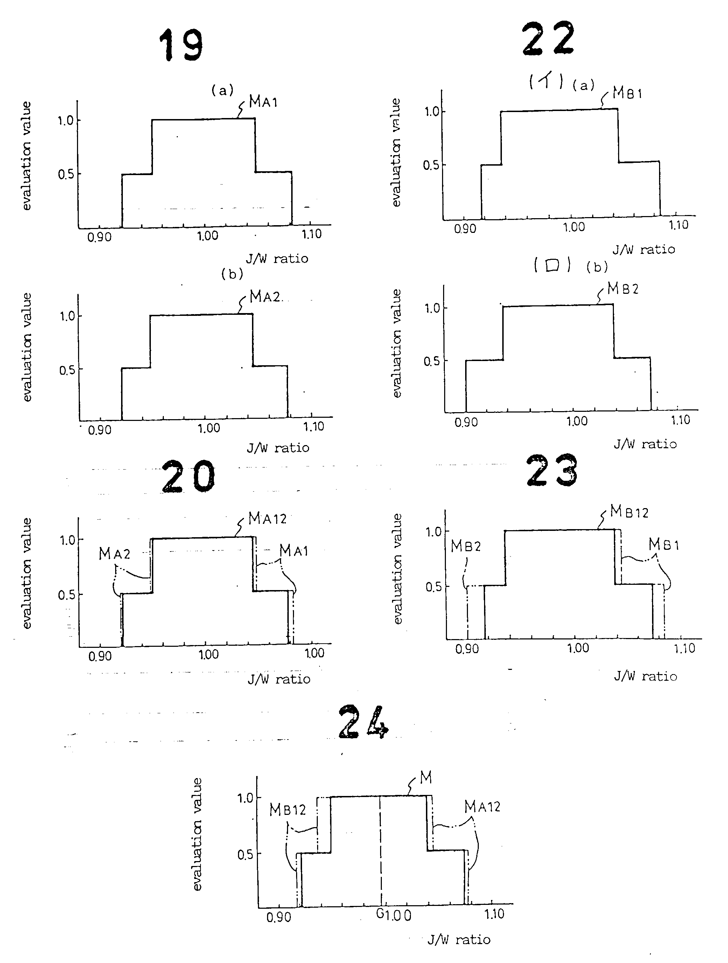

Fig. 16 shows another embodiment of the changed visual field in which automatic aperture devices 3b-1 and 3b-2 are incorporated. A plurality of (two in the figure shown) cameras 3-1 and 3-2 accommodated in camera boxes 3a-1 and 3a-2 are arranged on one side of the paper 1, and the light sources 2-1 and 2-2 accommodated in light source boxes 2a-1 and 2a-2 are arranged on the other side to make up a formation meter 50'. It is preferable to dispose the cameras 3-1 and 3-2 in the feeding direction of the paper 1.

Before starting and after completion of the control, the image is caught by the camera 3-2 with wider visual field and its signal is sent through the cable 8-2 to the display unit 7 and through the cable 4-2 to the image processing computing element 5. When the formation is improved after the starting of control and requirements for judging fine variance can be met, changeover to the camera 3-1 with narrower visual field is effected. Its signal is sent to the display unit 7 through the cable 8-1 and to the image processing computing element 5 through the cable 4-1 for further processing.

Although a plurality of cameras are required for such procedure, the cameras need not to be moved for change of visual field and may be fixed. The visual field can be quickly changed simply by switching over the plural cameras.

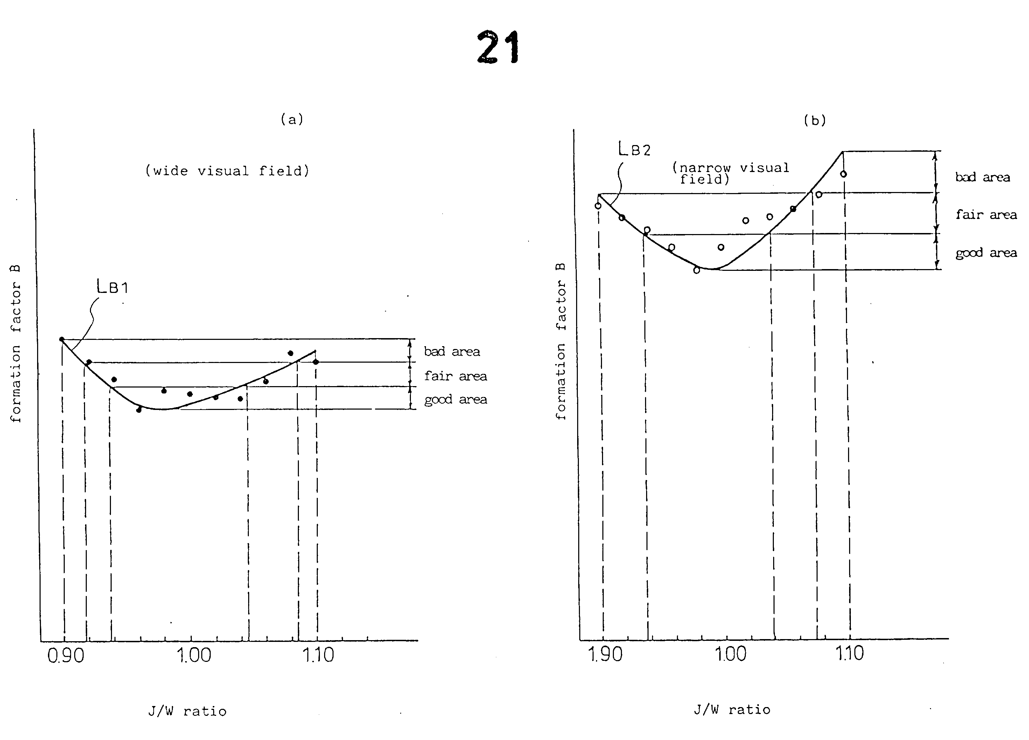

Fig. 17 shows a formation meter 50" in which images in wide and narrow visual fields are concurrently caught by a plurality of cameras with different visual fields and each of these images are introduced to the image processing computing element 5 (Fig. 3). In this formation member 50", support stands 71-1 and 71-2 are installed vertically movably along the rails 3c-1 and 3c-2 fixed in a upper main body frame 60 by drives 72-1 and 72-2 such as linear motors. The support stands 71-1 and 71-2 have thereon cameras 3-1 and 3-2 such as CCD (charge coupled device) frame accumulation mode cameras having automatic focusing function as well as automatic aperture devices 3b-1 and 3b-2. Further, light sources 2-1 and 2-2 such as parallel light sources with variable light quantity or stroboscopes are placed in a lower main body frame 61 opposedly to the above cameras 3-1 and 3-2.

When measurement is performed on on-line basis in the formation meter 50", the paper 1 on the line is fed between upper and lower main body frames 60 and 61 and images by transmitted lights from the light sources 2-1 and 2-2 and coming through the paper 1 are caught by the cameras 3-1 and 3-2. On the other hand, in the case where measurement is performed on off-line basis, the paper 1 as sample is set between the upper and lower main body frames 60 and 61 and images by the transmitted light from the light sources 2-1 and 2-2 and coming through the paper 1 are caught by the cameras 3-1 and 3-2. The image from the light source 2-2 caught by the camera 3-2 is in wide visual field while the image from the light source 2-1 caught by the camera 3-1 is in narrow visual field. Connected to the formation meter 50" shown in Fig. 17 are the image processing computing element 5 and the fuzzy control unit 110 similar to those in Fig. 3, though not shown in the figure.

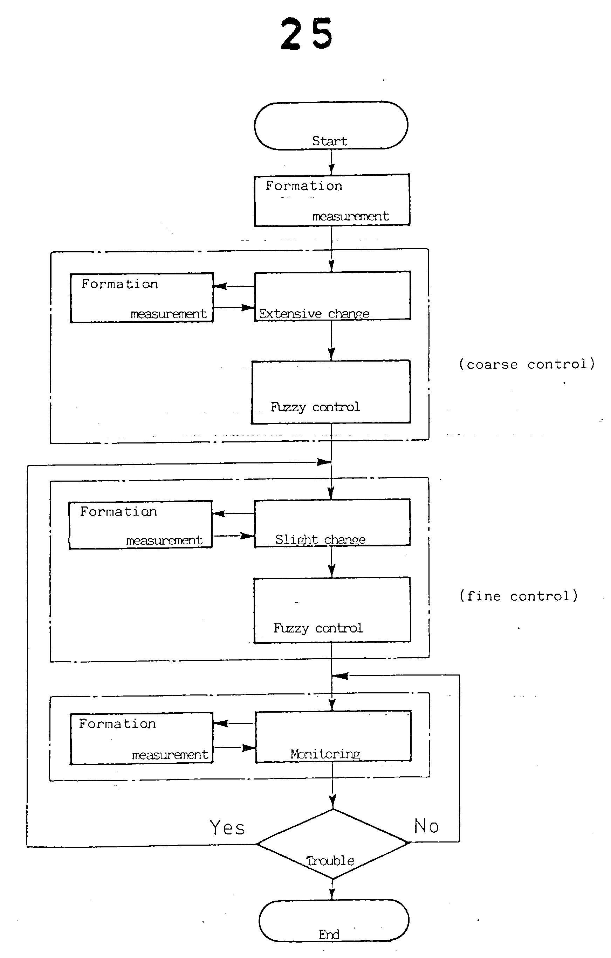

Figs. 18 to 24 show a procedure to control the formation by obtaining optimal value of J/W ratio, using the formation meter 50" shown in Fig. 17. Description is now given in detail on this procedure. Range of the J/W ratio change is set to a predetermined range (e.g. 0.90 - 1.10) and the range of the change is equally divided (e.g. into 10 equal parts). For the paper 1 with J/W ratio being set to a predetermined value (e.g. 0.90), images are caught by the lights from the light sources 2-2 and 2-1 passing through the paper 1 by the cameras 3-2 and 3-1 in wide and narrow visual fields, respectively. Based on each image, the formation factors A and B are obtained by the image processing computing element 5 from average primary variance $a_v$ of density, secondary variance of density $V_{av}$, variance $V_{aav}$ of the average value of density, frequency analysis specification in lateral direction and hole specification. By the same procedure, the formation factors A and B are sequentially obtained for the paper 1 in the case where the range of the J/W ratio change is equally divided. As shown in Figs. 18(a), 18(b), 21(a) and 21(b), variation curves $L_{A1}$, $L_{A2}$, $L_{B1}$ and $L_{B2}$ showing the relationship between J/W ratio and the formation factors A and B in wide and narrow visual fields are obtained. The formation factors are not limited to A or B and variation curves may be obtained further for formation factors C, D, ....

Then, by the fuzzy control unit 110, in each of the above variation curves $L_{A1}$, $L_{A2}$, $L_{B1}$ and $L_{B2}$, the area from lower to upper limit of the formation factors A and B is for example equally divided into three parts in the direction of ordinate to 'good area', 'fair area' and 'bad area'. Evaluation values for these good, fair and bad areas are set to 1.0, 0.5 and 0.0 as shown in Figs. 19(a), 19(b), 22(a) and 22(b) to obtain membership functions $M_{A1}$, $M_{A2}$, $M_{B1}$ and $M_{B2}$ showing the relationship between J/W ratio and evaluation values in wide and narrow visual fields.

Next, the membership functions $M_{A1}$ and $M_{A2}$ are overlapped to obtain wide-narrow visual field membership function $M_{A12}$ as shown in Fig. 20 for the formation factor A through adoption of only a portion where the above two functions overlap each other. The membership functions $M_{B1}$ and $M_{B2}$ are overlapped to obtain wide-narrow visual field membership function $M_{B12}$ as shown in Fig. 23 for the formation factor B through adoption of only a portion where two functions overlap each other. Further, the above wide-narrow visual field membership functions $M_{A12}$ and $M_{B12}$ are overlapped with each other to obtain overall membership function M as shown in Fig. 24 through adoption of only a portion where two functions overlap on each other. The center G of gravity of the area surrounded by this overall membership function M is obtained and is selected as optimal J/W ratio. J/W ratio is controlled to become the optimal J/W ratio. Alternatively, the membership functions $M_{A1}$ and $M_{B1}$ may be overlapped with each other.

By the same procedure, center of gravity is obtained from overall membership function for initial drainage by foils and the initial drainage control is performed so that foil angle takes optimal value. Also, for finishing drainage by deflector, center of gravity is obtained from overall membership function and the finishing drainage is controlled so that the deflector pushing degree and angle take optimal values.

Above all, in the case where there are two or more deflectors as drainage elements in the finishing drainage, membership functions are obtained by changing combination of pushing degree with angle and optimal values of pushing degree and angle are obtained for each deflector. Also, in the case where there are two or more foils in the initial drainage, membership functions are obtained by changing combination of angles of each foil and optimal value of angle is obtained for each foil.

Thus, membership functions are not prepared from the beginning in fuzzy control. But, control variables are respectively changed such as J/W ratio, foil angle in initial drainage, deflector pushing degree and angle in finishing drainage and evaluation values for each case are combined to generate an overall membership function. As the result, more reliable control can be achieved and production of various types of paper can be properly controlled.

Further, because the cameras 3-2 and 3-1 are arranged for different wide and narrow visual fields as sensors and the sample information is simultaneously obtained, formations can be obtained both macroscopically and microscopically as numerical values and control closer to control by human vision can be accomplished. As described above, fuzzy control is performed for J/W ratio, initial drainage and finishing drainage. Then, the range of the change around the optimal value of J/W ratio is set smaller than the range of the J/W ratio change in the previous fuzzy control and J/W ratio is sequentially changed within the smaller range of the change. By the same procedure as above, center of gravity is obtained from overall membership function and J/W ratio control is performed so that J/W ratio takes an optimal value obtained from the center of gravity this time. Initial and finishing drainages are also controlled such that the foil angle and deflector pushing degree take optimal values obtained from center of gravity this time.

Thereafter, watching is effected and continued unless any trouble occurs. When any trouble is detected such as decrease of formation due to external change including raw material conditions, control is restarted as described above (See Fig. 25).

In this way, range of the change of control variables such as J/W ratio, foil angle in the initial drainage and deflector pushing degree and angle in the finishing drainage, etc. are initially set to large values for coarse control. After coarse control is completed, range of the changes of each of the above control variables is set to smaller values and fine control is performed. Thus, in the initial stage of paper-making, products with considerable quality can be produced by the coarse control with satisfactory yield and products of high quality with good formation are obtained by the fine control.

Further, because the data obtained during fine control are accumulated, production of the same type of paper can be controlled later by only fine control. Reprocessing and rise-up times can be shortened and waste of products during reprocessing and rise-up operations can be eliminated.

## Claims

1. A formation measuring method comprising picking up an image of transmitted light from a light source (2) on an area of paper (1) by a camera (3) to display the image of the transmitted light on a display unit (5,7) of an image processing computing element, dividing the image of the transmitted light on the display unit into a predetermined size and number of windows, characterised by calculating an average value of intensity and a primary variance of intensity of each window from the intensity of each of the pixels in each of the windows, calculating an average value of the primary variance for all of the windows and a secondary variance of said primary variance for all of the windows and using the secondary variance for all of the windows as the formation factor.

2. A formation measuring method comprising picking up an image of transmitted light from a light source (2) on an area of paper (1) by a camera (3) to display the image of the transmitted light on a display unit (5,7) of an image processing computing element, dividing the image of the transmitted light on the display unit into a predetermined size and number of windows, characterised by calculating an average value of intensity and a primary variance of intensity of each window from the intensity of each of the pixels in each of the windows, calculating an average value of the primary variance for all of the windows and a secondary variance of said primary variance for all of the windows and using as the form factor one of, or two or more in combination of, the average value of the primary variance for all of the windows, the variance of average values of intensity of each window and the secondary variance of said primary variance of intensity of all of the windows.

3. A formation measuring method as claimed in claim 1 or claim 2 characterised by automatically changing an aperture of the camera (3) at a predetermined interval to obtain values of a plurality of formation factors at each aperture, thereby obtaining a variation curve of each of the formation factors, calculating a membership function from each of the variation curves of the formation factors, synthesising each of the membership functions to obtain a centre of gravity thereof, thereby obtaining an optimum aperture, and automatically adjusting the aperture of the camera to the said optimum aperture.

4. A formation measuring method according to claim 1, 2 or 3 wherein the light source (2) comprises stroboscope.

5. A formation control method characterised by obtaining, based on experiments performed in advance, a plurality of membership function curves to characterise the quality of paper (1) in a plurality of catagories from 'worst' to 'best' corresponding to formation factors, and a plurality of membership function curves for control corresponding to changes of J/W ratio, foil angle and deflector pushing degree; determining the degree of matching at intersections of the formation factors obtained by the formation measuring method according to claim 1, 2 or 3 with each of the membership function curves to specify the quality of the paper (1), obtaining, in correspondence to each of the degrees of matching results of J/W ratio changes from the respective membership function curves showing changes of J/W ratio, overlapping and synthesizing results of estimated change of J/W ratio to find final membership functions showing final estimated results of J/W ratio change; determining the actual change of J/W ratio for control of J/W ratio based on the final membership function; repeating these procedures until no decrease of formation factor is seen by the repeated change of J/W ratio; and determining for control the foil angle and deflector pushing degree, respectively, in the same manner.

6. A formation control method according to claim 5, the method being iterated and in which the control membership function is selected depending upon whether a difference between the formation factor in a last control and the formation factor in a current control is positive or negative.

7. A formation control method characterized in that at the commencement of measurement the entire formation is observed by raising a camera (3) along a rail (3c) to widen the visual field of the camera; the visual field of the camera (3) being then gradually narrowed by moving the camera (3) down along the rail (3c) as the formation is improved; using a formation control method according to claim 5 or 6; the camera (3) being then raised up again to return to the initial large visual field for monitoring when the formation is substantially stabilised and the control is almost completed.

8. A formation control method characterised in that a plurality of cameras (3-1,3-2) are arranged at different distances from the paper; at the commencement of measurement, the entire formation is observed by one of the cameras (3-1) with a widest visual field; changeover to a camera (3-2) with a narrower visual field is then effected as the formation is improved using a formation control method according to claim 5 or 6; and changeover back to the camera (3-1) with the widest visual field is effected for monitoring when the formation is substantially stabilised and the control is almost completed.

9. A formation control method according to claim 5 or 6 characterised in that the density of the image in a lateral direction is frequency-analyzed to determine whether the formation is pulling or pushing; in the case of a pulling formation, the J/W ratio is increased, and in the case of a pushing formation, the J/W ratio is decreased.

10. A formation control method characterised in that, with a J/W ratio being changed sequentially, an image of transmitted light from a light source on paper (1) is picked up by a camera (3) and is introduced into an image processing computing element to obtain a plurality of formation factors representative of the formation of the paper for each J/W ratio in accordance with a formation measuring method as claimed in any one of claims 1 to 3, thereby obtaining variation curves representative of a relationship between the J/W ratio and the formation factors; then, a plurality

EP 0 428 751 B1

of membership functions representative of the relationship between the J/W ratio and an estimated value are calculated based on each of the variation curves; the membership functions are overlapped with each other and only an overlapped portion thereof is adopted to obtain an overall membership function; a centre of gravity of an area defined by the overall membership function is obtained to define an optimum J/W ratio; the J/W ratio is controlled to be equal to the said optimum J/W ratio; in the same manner a plurality of foil angles are changed for initial drainage control, and a plurality of deflector pushing degrees and angles are changed for finishing drainage control.

11. A formation control method according to claim 7 wherein a range of variation of control variables in the J/W ratio are set to large values for coarse control; and after the coarse control is completed, range of variation of each of the control variables is set to smaller values and fine control is performed in steps.

12. A formation control method in a paper-making machine according to claim 8 wherein monitoring is started in a status where the formation is being stabilised in the control of the last stage.

13. A formation control method in a paper-making machine according to any one of claims 7, 8 or 9 wherein a plurality of cameras (3-1, 3-2) with different visual fields are arranged so that images of transmitted light from a light source on paper are caught by the cameras concurrently in wide and narrow visual fields and are introduced to the image processing computing element.


**Patentansprüche**

1. Verfahren zum Messen von Texturen, umfassend das Aufnehmen eines Bildes aus durchgelassenem Licht von einer Lichtquelle (2) auf einem Papierbereich (1) durch eine Kamera (3), um das Bild des durchgelassenen Lichtes auf einer Anzeigeeinheit (5,7) eines bildverarbeitenden Rechnerelementes anzuzeigen, das Aufteilen des Bildes des durchgelassenen Lichtes auf der Anzeigeeinheit in eine vorbestimmte Größe und Anzahl von Fenstern, gekennzeichnet durch das Berechnen eines Durchschnittswertes der Intensität und einer primären Varianz der Intensität jedes Fensters aus der Intensität jedes der Bildpunkte in jedem der Fenster, das Berechnen eines Durchschnittswertes der primären Varianz für alle Fenster und einer sekundären Varianz dieser ersten Varianz für alle Fenster und Verwendung der sekundären Varianz für alle Fenster als Texturfaktor.

2. Verfahren zum Messen von Texturen, umfassend das Aufnehmen eines Bildes aus durchgelassenem Licht von einer Lichtquelle (2) auf einem Papierbereich (1) durch eine Kamera (3), um das Bild des durchgelassenen Lichtes auf einer Anzeigeeinheit (5,7) eines bildverarbeitenden Rechnerelementes anzuzeigen, das Aufteilen des Bildes des durchgelassenen Lichtes auf der Anzeigeeinheit in eine vorbestimmte Größe und Anzahl von Fenstern, gekennzeichnet durch das Berechnen eines Durchschnittswertes der Intensität und einer primären Varianz der Intensität jedes Fensters aus der Intensität jedes der Bildpunkte in jedem der Fenster, das Berechnen eines Durchschnittswertes der primären Varianz für alle Fenster und einer sekundären Varianz dieser ersten Varianz für alle Fenster und Verwendung eines Wertes oder einer Kombination von mehreren aus dem Durchschnittswert der primären Varianz für alle Fenster, der Varianz der Durschnittswerte der Intensität für alle Fenster und der sekundären Varianz dieser primären Varianz der Intensität für alle Fenster als Texturfaktor.

3. Verfahren nach Anspruch 1 oder Anspruch 2, gekennzeichnet durch das automatische Wechseln einer Blende der Kamera (3) bei einer bestimmten Zeitspanne, um Werte einer Mehrzahl von Texturfaktoren bei jeder Blende zu erhalten, wodurch eine Variationskurve für jeden der Texturfaktoren erhalten wird, das Berechnen einer Zugehörigkeitsfunktion aus jeder der Variationskurven der Texturfaktoren, das Synthetisieren jeder der Zugehörigkeitsfunktionen, um ihren Schwerpunkt zu ermitteln, wodurch eine optimale Blende erhalten wird, und das automatische Einstellen der Blende der Kamera auf diese optimale Blende.

4. Verfahren nach Anspruch 1, 2 oder 3, dadurch gekennzeichnet, daß die Lichtquelle ein Stroboskop umfaßt.

5. Verfahren zum Steuern von Texturen, gekennzeichnet durch

das auf vorher durchgeführte Experimente aufbauende Gewinnen einer Mehrzahl von Zugehörigkeitsfunktionskurven, um die Qualität von Papier (1) in einer Mehrzahl von Kategorien von "schlechtest" bis "bestens" entsprechend Texturfaktoren einzuordnen, und einer Mehrzahl von Zugehörigkeitsfunktionskurven zum Steuern, die Veränderungen des J/W-Verhältnisses, des Folienwinkels und des Deflektor-Druckgrades entsprechen,

das Bestimmen des Übereinstimmungsgrades bei Überschneidungen der durch die Verfahren nach Anspruch 1, 2 oder 3 erhaltenen Texturfaktoren mit jeder der Zugehörigkeitsfunktionskurven, um die Qualität des Papieres (1) zu bestimmen,

das Ermitteln von Veränderungen der entsprechenden Zugehörigkeitsfunktionskurven, die Veränderungen des J/W-Verhältnisses anzeigen, in Übereinstimmung mit jedem der Grade von übereinstimmenden Ergebnissen der Veränderung des J/W-Verhältnisses,

das Überlappen und Synthetisieren von Ergebnissen der geschätzten Veränderung des J/W-Verhältnisses, um endgültige Zugehörigkeitsfunktionen zu finden, die endgültige geschätzte Ergebnisse der Veränderung des J/W-Verhältnisses anzeigen,

das Bestimmen der momentanen Veränderung das J/W-Verhältnisses zum Steuem des J/W-Verhältnisses, basierend auf der endgültigen Zugehörigkeitsfunktion,

das Wiederholen dieser Verfahrensschritte, bis keine Verringerung des Texturfaktors durch die wiederholte Veränderung des J/W-Verhältnisses sichtbar ist, und

das Bestimmten des Folienwinkels bzw. des Deflektor-Druckgrades zur Steuerung auf die gleiche Weise.

6. Verfahren nach Anspruch 5, dadurch gekennzeichnet, daß das Verfahren iteriert wird und daß die Zugehörigkeitsfunktion zur Steuerung abhängig davon gewählt wird, ob ein Unterschied zwischen dem Texturfaktor in einer letzten Kontrolle und der jetztigen Kontrolle positiv oder negativ ist.

7. Verfahren zur Steuerung von Texturen, dadurch gekennzeichnet, daß beim Beginn der Messung die gesamte Textur durch Heben einer Kamera (3) entlang einer Schiene (3c) zum Erweitem des Sichtfeldes der Kamera betrachtet wird, wobei das Sichtfeld der Kamera (3) dann durch Bewegen der Kamera entlang der Schiene (3c) nach unten allmählich verringert wird, wenn die Textur verbessert wird, daß ein Steuerungsverfahren für die Textur nach Anspruch 5 oder 6 verwendet wird, wobei die Kamera dann wieder angehoben wird, um zu dem ursprünglichen großen Sichtfeld zum Überwachen zurückzukehren, wenn die Textur im wesentlichen stabilisiert und die Kontrolle fast beendet ist.

8. Verfahren zur Steuerung von Texturen, dadurch gekennzeichnet, daß eine Mehrzahl von Kameras (3-1, 3-2) in unterschiedlichen Abständen von dem Papier angeordnet sind, daß zu Beginn der Messung die gesamte Textur von einer der Kameras mit dem größten Blickfeld betrachtet wird, daß dann auf eine Kamera (3-2) mit einem engeren Sichtfeld umgeschaltet wird, wenn die Textur unter Verwendung eines Verfahrens zum Steuem von Texturen nach Anspruch 5 oder 6 verbessert wird, und daß zum Überwachen zurück auf die Kamera (3-1) mit dem größten Sichtfeld umgeschaltet wird, wenn die Textur im wesentlichen stabilisiert und die Kontrolle weitgehend beendet ist.

9. Verfahren nach Anspruch 5 oder 6, dadurch gekennzeichnet, daß die Dichte des Bildes in lateraler Richtung frequenzanalysiert wird, um zu bestimmen, ob die Textur drückt oder zieht, daß im Fall einer ziehenden Textur das J/W-Verhältnis erhöht, und im Fall einer drückenden Textur das J/W-Verhältnis verringert wird.

10. Verfahren zur Steuerung von Texturen, dadurch gekennzeichnet, daß bei einem J/W-Verhältnis, das nacheinander verändert wird, ein Bild von durchgelassenem Licht von einer Lichtquelle auf Papier (1) von einer Kamera (3) aufgenommen und in ein bildverarbeitendes Rechnerelement eingespeist wird, um entsprechend einem Verfahren zum Messen von Texturen nach einem der Ansprüche 1 bis 3 eine Mehrzahl von Texturfaktoren zu erhalten, die die Textur des Papiers für jedes J/W-Verhältnis wiedergeben, wodurch Variationskurven erhalten werden, die eine Beziehung zwischen dem J/W-Verhältnis und den Texturfaktoren darstellen, daß dann basierend auf jeder der Variationskurven eine Mehrzahl von Zugehörigkeitsfunktionen berechnet wird, die die Beziehung zwischen dem J/W-Verhältnis und einem geschätzten Wert darstellen, die Zugehörigkeitsfunktionen gegenseitig überlappt werden und nur ein überlappender Abschnitt davon zum Erreichen einer allgemeinen Zugehörigkeitsfunktion übemommen wird, daß ein Schwerpunkt eines durch die allgemeine Zugehörigkeitsfunktion bestimmten Bereiches ermittelt wird, um ein optimales J/W-Verhältnis zu definieren, daß das J/W-Verhältnis so gesteuert wird, daß es gleich dem optimalen J/W-Verhältnis ist, daß auf die selbe Weise zur anfänglichen Drainagesteuerung eine Mehrzahl von Folienwinkeln verändert wird, und daß wird für die Steuerung der Enddrainage eine Mehrzahl von Druckgraden und -winkeln des Deflektors verändert wird.

11. Verfahren nach Anspruch 7, dadurch gekennzeichnet, daß ein Variationsbereich von Steuervariablen im J/W-Verhältnis für die Grobsteuerung auf große Werte gesetzt wird und der Veriationsbereich jeder der Steuervariablen auf kleinere Werte gesetzt wird, nachdem die Grobsteuemg beendet ist, und daß die Feinsteuerung in Schritten durchgeführt wird.

12. Verfahren zur Steuemg von Texturen in einer Papiermaschine nach Anspruch 8, dadurch gekennzeichnet, daß das Überwachen in einem Zustand begonnen wird, in dem die Textur in der Steuemg der letzten Stufe stabilisiert wird.

13. Verfahren nach einem der Ansprüche 7, 8 oder 9, dadurch gekennzeichnet, daß eine Mehrzahl von Kameras (3-1, 3-2) mit unterschiedlichen Sichtfeldem so angeordnet sind, daß die Bilder des durchgelassenen Lichtes von einer Lichtquelle auf Papier durch die Kameras gleichzeitig in breiten und engen Blickfeldem aufgenommen und dem bildverarbeitenden Rechnerelement zugeführt werden.

## Revendications

1. Procédé de mesure de la texture ou formation de la feuille comprenant la détection d'une image de lumière transmise depuis une source de lumière (2) sur une zone de papier (1) par une caméra (3) afin d'afficher l'image de la lumière transmise sur une unité d'affichage (5, 7) d'un élément de calculateur de traitement d'image, le partage de l'image de la lumière transmise sur l'unité d'affichage en un format et un nombre de fenêtres prédéterminés, caractérisé par le calcul d'une valeur moyenne d'intensité et d'une variance principale de l'intensité de chaque fenêtre à partir de l'intensité de chacun des pixels dans chacune des fenêtres, le calcul d'une valeur moyenne de la variance principale pour la totalité des fenêtres et d'une variance secondaire de ladite variance principale pour la totalité des fenêtres, et l'utilisation de la variance secondaire pour la totalité des fenêtres en tant que facteur de texture ou formation.

2. Procédé de mesure de la texture ou formation de la feuille comprenant la détection d'une image de lumière transmise à partir d'une source de lumière (2) sur une zone de papier (1) par une caméra (3) afin d'afficher l'image de la lumière transmise sur une unité d'affichage (5, 7) d'un élément de calculateur de traitement d'image, le partage de l'image de lumière transmise sur l'unité d'affichage en un format et un nombre de fenêtres prédéterminés, caractérisé par le calcul d'une valeur moyenne d'intensité et d'une variance principale de l'intensité de chaque fenêtre à partir de l'intensité de chacun des pixels dans chacune des fenêtres, le calcul d'une valeur moyenne de la variance principale pour la totalité des fenêtres et d'une variance secondaire de ladite variance principale pour la totalité des fenêtres, et l'utilisation en tant que facteur de texture ou formation de l'une, ou de deux ou davantage en combinaison, de la valeur moyenne de la variance principale pour la totalité des fenêtres, de la variance des valeurs moyennes d'intensité pour chaque fenêtre et de la variance secondaire de ladite variance principale d'intensité de la totalité des fenêtres.

3. Procédé de mesure de la texture ou formation de la feuille selon la revendication 1 ou la revendication 2, caractérisé par une modification automatique d'une ouverture de la caméra (3) à intervalles prédéterminés afin d'obtenir des valeurs d'une pluralité de facteurs de texture ou formation pour chaque ouverture, en obtenant ainsi une courbe de variation de chacun des facteurs de texture ou formation, le calcul d'une fonction d'appartenance à partir de chacune des courbes de variation des facteurs de texture ou formation, la synthèse de chacune des fonctions d'appartenance afin d'obtenir un centre de gravité de celles-ci, en obtenant ainsi une ouverture optimum, et en réglant automatiquement l'ouverture de la caméra à ladite ouverture optimum.

4. Procédé de mesure de la texture ou formation de la feuille selon la revendication 1, 2 ou 3 dans lequel la source de lumière (2) comprend un stroboscope.

5. Procédé de commande de la formation de la feuille caractérisé par l'obtention, sur la base d'expérimentations effectuées à l'avance, d'une pluralité de courbes de fonction d'appartenance afin de caractériser la qualité du papier (1) dans une pluralité de catégories allant de "la plus mauvaise" à "la meilleure", correspondant aux facteurs de texture ou formation, et d'une pluralité de courbes de fonction d'appartenance pour la commande correspondant à des variations du rapport J/T, de l'angle d'ailette et du degré de poussée du déflecteur, la détermination du degré d'adaptation au niveau des intersections des facteurs de texture ou formation obtenus par le procédé de mesure de la texture ou formation de la feuille selon la revendication 1, 2 ou 3 avec chacune des courbes de fonction d'appartenance afin de spécifier la qualité du papier (1), l'obtention, en correspondance avec chacun des degrés d'adaptation, de résultats des variations du rapport J/T à partir des courbes de fonction d'appartenance respectives représentant les variations du rapport J/T, la superposition et la synthèse des résultats de la variation estimée du rapport J/T afin de trouver les fonctions d'appartenance finales représentant les résultats estimés finaux de la variation du rapport J/T, la détermination de la variation réelle du rapport J/T pour la commande du rapport J/T sur la base de la fonction d'appartenance finale, la répétition de ces procédures jusqu'à ce qu'aucune décroissance du facteur de texture ou formation ne soit observée par la variation répétée du rapport J/T, et la détermination de la commande de l'angle d'ailette et du degré de poussée du déflecteur, respectivement, de la même manière.

6. Procédé de commande de la texture ou formation de la feuille selon la revendication 5, le procédé étant itéré, et dans lequel la fonction d'appartenance de commande est sélectionnée selon qu'une différence entre le facteur de texture ou formation dans une dernière commande et le facteur de texture ou formation dans une commande en cours, est positive ou négative.

7. Procédé de commande de la formation de la feuille caractérisé en ce qu'au début de la mesure, la texture ou formation de la feuille entière est observée en élevant une caméra (3) le long d'un rail (3c) afin d'élargir le champ de vision de la caméra, le champ de vision de la caméra (3) étant alors progressivement rétréci en déplaçant la caméra (3) vers le bas le long du rail (3(c) à mesure que la texture ou formation de la feuille est améliorée, en ce que l'on utilise un procédé de commande de la formation de la feuille selon la revendication 5 ou la revendication 6, la caméra (3) étant alors élevée à nouveau pour revenir au grand champ de vision initial afin de surveiller lorsque la texture ou formation de la feuille est pratiquement stabilisée et que la commande est presque achevée.

8. Procédé de commande de la formation de la feuille caractérisé en ce qu'une pluralité de caméras (3-1, 3-2) sont agencées à des distances différentes du papier, en ce qu'au début de la mesure, la texture ou formation de la feuille entière est observée par l'une des caméras (3-1) avec un champ de vision plus large, en ce que l'on passe alors à une caméra (3-2) avec un champ de vision plus étroit à mesure que la texture ou formation de la feuille s'améliore en utilisant un procédé de commande de la formation de la feuille selon la revendication 5 ou la revendication 6, et en ce que l'on revient à la caméra (3-1) présentant le champ de vision le plus large pour la surveillance lorsque la texture ou formation de la feuille est pratiquement stabilisée et que la commande est presque achevée.

9. Procédé de commande de la formation de la feuille selon la revendication 5 ou 6, caractérisé en ce que la densité de l'image dans un sens latéral est analysée en fréquence afin de déterminer si la texture ou formation de la feuille est en étirement ou en compression, dans le cas d'une texture ou formation de la feuille en étirement, le rapport J/T est augmenté, et dans le cas d'une texture ou formation de la feuille en compression, le rapport J/T est diminué.

10. Procédé de commande de la formation de la feuille caractérisé en ce que, en modifiant en séquence le rapport J/T, une image de la lumière transmise depuis une source de lumière sur du papier (1) est détectée par une caméra (3) et est introduite dans un élément de calculateur de traitement d'image afin d'obtenir une pluralité de facteurs de texture ou formation représentatifs de la texture ou formation de la feuille du papier pour chaque rapport J/T conformément à un procédé de mesure de la texture ou formation de la feuille selon l'une quelconque des revendications 1 à 3, en obtenant ainsi des courbes de variation représentatives d'une relation entre le rapport J/T et les facteurs de texture ou formation, puis, l'on calcule une pluralité de fonctions d'appartenance représentatives de la relation entre le rapport J/T et une valeur estimée sur la base de chacune des courbes de variation, les fonctions d'appartenance sont superposées l'une à l'autre et seule une partie en superposition de celles-ci est retenue pour obtenir une fonction d'appartenance globale, un centre de gravité d'une zone définie par la fonction d'appartenance globale est obtenu afin de définir un rapport J/T optimum, le rapport J/T est commandé de façon qu'il soit égal audit rapport J/T optimum, de la même manière, une pluralité d'angles d'ailettes sont modifiés pour la commande de l'extraction initiale, et une pluralité de degrés de poussée de déflecteur et d'angles de déflecteur sont modifiés pour la commande de l'extraction de finition.

11. Procédé de commande de la formation de la feuille selon la revendication 7 dans lequel une plage de variation des variables de commande du rapport J/T est établie à des valeurs plus grandes pour la commande approchée, et après que la commande approchée soit achevée, la plage de variation de chacune des variables de commande est établie à des valeurs plus petites et une commande fine est effectuée par étapes.

12. Procédé de commande de la formation de la feuille dans une machine à papier selon la revendication 8 dans lequel la surveillance est commencée dans un état dans lequel la texture ou formation de la feuille est stabilisée dans la commande du dernier stade.

13. Procédé de commande de la formation de la feuille dans une machine à papier selon l'une quelconque des revendications 7, 8 ou 9, dans lequel une pluralité de caméras (3-1, 3-2) avec des champs de vision différents sont agencées de sorte que des images de lumière transmise depuis une source de lumière sur du papier, sont captées par les caméras simultanément dans des champs de vision large et étroit et sont introduites dans l'élément de calculateur de traitement d'image.

1

g    h    i    j              b

output

a

power source

f    e    d    c

2

formation index

time

# 3

4

(a)

9

(b)

$W_1$

$W_2$

$W_K$

$W_N$

(c)

$C_{av1}$
$V_{av1}$

$C_{av2}$
$V_{av2}$

$C_{avK}$
$V_{avK}$

$C_{avN}$
$V_{avN}$

(d)

average value of primary variance

$$av = \frac{\sum\limits_{K=1}^{N} V_{avK}}{N}$$

secondary variance (variance of primary variance)

$$V_{av} = \frac{\sum\limits_{K=1}^{N} (av - V_{avK})^2}{N}$$

(d')

$$av = \frac{\sum\limits_{K=1}^{N} V_{avK}}{N}$$

average value of primary variance

$$V_{av} = \frac{\sum\limits_{K=1}^{N} (av - V_{avK})^2}{N}$$

secondary variance (variance of primary variance)

$$V_{aav} = \frac{\sum\limits_{K=1}^{N} (C_{avK} - C_{aav})^2}{N}$$

variance of average value

5

$$\begin{array}{|c|c|c|c|}
\hline
C_{111} & C_{112} & C_{113} & C_{114} \\
\hline
C_{121} & C_{122} & C_{123} & C_{124} \\
\hline
C_{131} & C_{132} & C_{133} & C_{134} \\
\hline
C_{141} & C_{142} & C_{143} & C_{144} \\
\hline
C_{151} & C_{152} & C_{153} & C_{154} \\
\hline
\end{array}$$

$W_N$

6

a1-th row        9        ai-th row    an-th row

b1-th column

bi-th column

bn-th column

7

average concentration

pushing formation        pulling formation

ideal formation

frequency

8

(b)

(c)

30  30  30
31 ( 31/  31

(a)

30    31    30

9'

void
ratio

$$V_\theta = \frac{\Sigma S_V}{S} \times 100 (\%)$$

over
weight
ratio

$$K = \frac{\Sigma S_K}{S} \times 100 (\%)$$

9

(d)

(e)

9''

9'''

9

wire part     press part     dryer part     calender part

10

# 11

# 12

13

**14**

# 15

Run

Formation measurement

Membership function

Change of J/W ratio due to the change of wire speed

Formation measurement

Has formation been improved?

YES / NO

Membership function

Change of foil angle

Formation measurement

Has formation been improved?

YES / NO

Membership function

Change of deflector pushing degree

Formation measurement

Has formation been improved?

YES / NO

STOP

# 16

# 17

formation factor A

(a)

(wide visual field)

J/W ratio

0.90

1.00

1.10

LA1

good area

fair area

bad area

18

formation factor A

(b)

(narrow visual field)

J/W ratio

0.90

1.00

1.10

LA2

good area

fair area

bad area

# 19

**(a)**

MA1

evaluation value

1.0

0.5

0.90   1.00   1.10

J/W ratio

**(b)**

MA2

evaluation value

1.0

0.5

0.90   1.00   1.10

J/W ratio

# 20

MA12

MA2        MA1

evaluation value

1.0

0.5

0.90   1.00   1.00

J/W ratio

# 22

(イ) (a)   MB1

evaluation value

1.0

0.5

0.90   1.00   1.10

J/W ratio

(ロ) (b)   MB2

evaluation value

1.0

0.5

0.90   1.00   1.10

J/W ratio

# 23

MB12

MB2        MB1

evaluation value

1.0

0.5

0.90   1.00   1.10

J/W ratio

# 24

M

MB12        MA12

evaluation value

1.0

0.5

0.90   G1.00   1.10

J/W ratio

formation factor B

(wide visual field)

(a)

LB1

J/W ratio

0.90  1.00  1.10

good area
fair area
bad area

21

formation factor B

LB2

(narrow visual field)

(b)

J/W ratio

0.90  1.00  1.10

good area
fair area
bad area

## 2 5

Start

Formation measurement

Formation measurement → Extensive change

Fuzzy control

(coarse control)

Formation measurement → Slight change

Fuzzy control

(fine control)

Formation measurement → Monitoring

Yes — Trouble — No

End